# DEMANDE DE BREVET EUROPEEN

(11) **EP 4 760 234 A2**
(43) Date de publication de la demande: **17.06.2026**
(21) Numéro de dépôt: 26166479.1
(22) Date de dépôt: 27.09.2022
(51) Int. Cl.: G01N 15/00

(54) **DISPOSITIF DE DISTANCIATION DES PARTICULES ET D AIDE À L ACQUISITION D'IMAGES D'UN ÉCHANTILLON DE PARTICULES À ÉPANDRE OU SEMER**

(30) Priorité: 30.09.2021 FR 2110308
(62) Demande divisionnaire de: 22197938.8
(71) Demandeur: Burel Production, 35220 Chateaubourg (FR)
(72) Inventeur: LECLAIR, Emeric, 35450 DOURDAIN (FR); LEVEILLE, Lionel, 35500 VITRE (FR); GRIPON, Nathan, 50320 LA HAYE-PESNEL (FR); JUHEL, Thomas, 35140 SAINT AUBIN DU CORMIER (FR)
(74) Mandataire: Vidon Brevets & Stratégie

(57) **Abrégé**

L'invention concerne un dispositif de distanciation de particules et d'aide à l'acquisition d'images d'un échantillon de particules à épandre ou semer, susceptibles d'être utilisées pour déterminer des caractéristiques morphologiques desdites particules, pour prédire des paramètres appropriés d'épandage ou de semis, le dispositif étant portatif, et comprenant une plaque (121) de dépose dudit échantillon de particules, ladite plaque de dépose comprenant une pluralité d'alvéoles définissant un motif régulier d'emplacements et formant chacune un emplacement pour recevoir une desdites particules, lesdites particules pouvant rouler, se répandre sur la plaque, et se loger chacune dans l'une des alvéoles, la profondeur desdites alvéoles étant choisie de façon que les particules restent ancrées sur la plaque de dépose, même dans le cas où le dispositif n'est pas placé dans un plan horizontal, par exemple à proximité d'une zone d'épandage ou de semis desdites particules.

## Description

### Domaine technique

Le domaine de l'invention est celui du réglage des systèmes de distribution centrifuge de particules à semer ou à épandre en agriculture. Plus précisément, l'invention concerne la détermination de caractéristiques morphologiques de telles particules, par analyse d'images, pour prédire des paramètres appropriés d'épandage, notamment la portée de projection des particules, et l'angle moyen de la nappe d'épandage, dans le but de régler une machine d'épandage. Notamment, l'invention concerne plus particulièrement un dispositif d'aide à l'acquisition d'images d'un échantillon de particules à semer ou épandre, susceptibles d'être utilisées à cette fin d'analyse.

### Art antérieur

L'application d'intrants agricoles par l'utilisation de la force centrifuge existe depuis les débuts de l'agriculture. Cette technique ancestrale a évolué au fil des siècles et des révolutions industrielles successives, pour aboutir à la conception actuelle des épandeurs centrifuges, qui sont principalement utilisés à ce jour pour l'application de produits fertilisants (mais également de semences), une fois la culture implantée, tant dans l'agriculture traditionnelle que dans l'agriculture biologique.

Pour limiter la pollution de l'environnement et le gaspillage des matières fertilisantes, il est important de continuer à améliorer la technologie de tels épandeurs, afin de maîtriser au mieux la précision d'application des produits fertilisants.

Ceci est d'autant plus important qu'il existe également d'autres champs d'application, présents ou futurs, de tels épandeurs centrifuges, tels que l'application de produits de lutte contre les limaces, ou le semis de graines à la volée.

Un épandeur centrifuge est classiquement équipé d'un système de dosage du produit à épandre et d'un système de distribution des particules dans l'espace. Le système de dosage permet de contrôler la quantité de produit à appliquer par unité de surface et est régi par les besoins agronomiques de la culture, définis par l'agriculteur. Le système de distribution permet quant à lui de contrôler l'application et la répartition homogène des particules sur le sol de la parcelle. Ce système utilise la force centrifuge pour créer l'énergie de déplacement des particules dans l'espace, force qui doit être contrôlée en fonction de la largeur d'épandage visée. Cette force centrifuge est créée par un disque équipé d'une ou plusieurs pale(s), actionné en rotation. Le système de dosage alimente le disque en produit à épandre, qui arrive généralement par le dessus du jeu de pales et est projeté en périphérie du disque grâce à la force exercée par le mouvement rotatif. Ainsi, une nappe de produit est créée à chaque fois qu'un échantillon de produit quitte le jeu de pales.

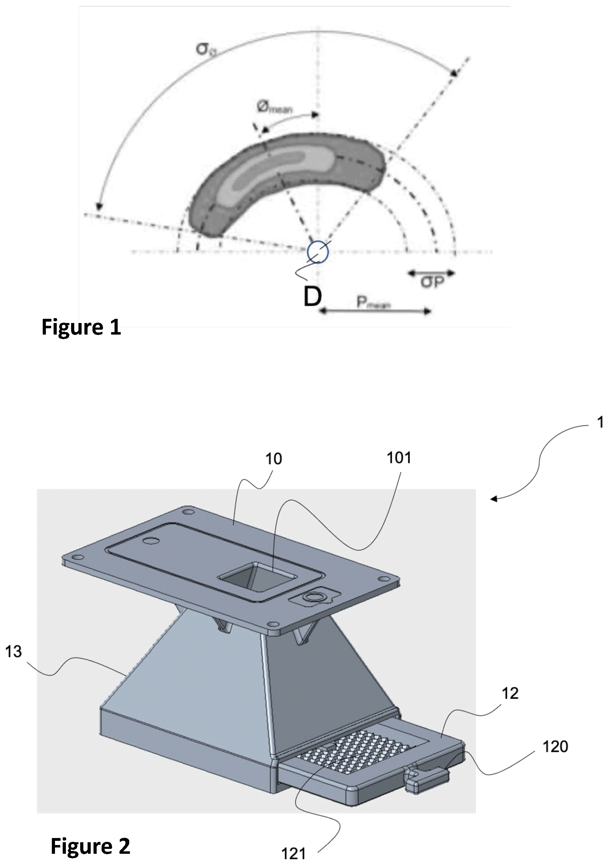

La nappe d'épandage au sol a la particularité d'avoir une forme de croissant, c'est-à-dire qu'elle est semi-circulaire et que le produit se répartit sous la forme d'une loi normale le long de l'arc de cercle mais aussi orthogonalement à celui-ci. Cette distribution transversale sous la forme d'une loi normale se retrouve donc aussi à la surface du sol. Il est donc impératif de compenser ce phénomène par un « recouvrement » entre les passages successifs. En fonction des caractéristiques physiques du produit et du système de distribution, la forme de cette nappe d'épandage au sol varie. Ainsi qu'illustré en **figure** 1, la forme de la nappe au sol en sortie du disque D peut de façon légèrement simplifiée être caractérisée par quatre grandeurs géométriques :
- L'angle moyen de projection : Ømean (°)
- L'écart type de l'angle de projection : σØ
- La portée de projection moyenne : Pmean (m)
- L'écart type sur la portée de projection : σP

En maîtrisant l'angle de projection et la portée de projection, il est possible de modéliser une fonction de transfert régissant le positionnement des particules sur le sol. Ainsi, en connaissant les caractéristiques du produit à épandre, en modélisant le comportement du système de distribution et en simulant l'impact du recouvrement, il est possible de contrôler la largeur d'application et garantir la répartition au sol la plus homogène possible.

Les caractéristiques du produit à épandre sont classiquement définies par trois propriétés :
- La *densité* du produit, exprimée en kg/litre, est définie à partir de la densité apparente du produit, c'est-à-dire la masse d'un volume de produit (et du volume d'air correspondant entre les particules de produit) contenu dans un contenant déterminé.
   La densité du produit influence sa portée de projection ; en effet, dans des conditions de projection similaires et avec une forme et une taille équivalentes, une particule dense ira plus loin qu'une particule légère. La densité influence également l'angle de projection.
- Le *coefficient de traînée* du produit est défini à partir de l'angularité moyenne d'un échantillon du produit. L'angularité d'une particule est un coefficient compris entre 0 et 1, où un coefficient de 1 correspond à une particule parfaitement sphérique.
   Le coefficient de traînée du produit influence sa portée de projection ; en effet, dans des conditions de projection similaires et avec un volume et un poids équivalents, une particule sphérique ira plus loin qu'une particule angulaire.
- La *granulométrie* du produit est définie à partir du D50 d'un échantillon du produit. Le D50 correspond au diamètre de tamis qui sépare l'échantillon en deux tas ayant le même nombre de particules ; il est exprimé en millimètres.
   La granulométrie du produit influence sa portée de projection ; elle influence également l'angle de projection.

Les études et recherches menées conjointement par le Demandeur et l'Institut national de recherche pour l'agriculture, l'alimentation et l'environnement (INRAe) depuis le début des années 2000 ont mis en évidence l'influence des caractéristiques du produit à épandre sur les paramètres de réglage de la largeur de travail d'un épandeur centrifuge. Ceci est notamment décrit dans le brevet EP 2 080 430 B1 au nom du Demandeur.

Pour un réglage optimum de la machine d'épandage, qui s'impose dans le cadre d'une agriculture de précision respectueuse de l'environnement, il apparaît donc capital de tenir compte des caractéristiques des particules à épandre.

Pour cette raison, les différents fabricants d'épandeurs centrifuges proposent à leurs utilisateurs des services d'assistance au réglage de leurs machines, qui tiennent compte de tout ou partie de ces caractéristiques.

Ainsi, le Demandeur propose à ses clients un service appelé Fertitest^{®}, accessible sur une plateforme en ligne, collaborative, qui intègre une base de données recensant plus de 2000 engrais granulés ou compactés. L'utilisateur peut saisir la référence du produit qu'il souhaite épandre, et obtenir les paramètres de réglage adéquats de l'épandeur, obtenus par modélisation, en fonction de cette référence, de celle de la machine qu'il utilise, et du jeu de pales qui l'équipe. Pour les produits qui ne sont pas référencés dans la base de données Fertitest^{®}, une fonctionnalité de recherche approchante permet à l'agriculteur d'identifier le produit référencé dont les caractéristiques sont les plus proches, pour en déduire des paramètres de réglage adéquats de l'épandeur.

La société Amazone^{®} propose quant à elle un système appelé EasyCheck^{®}, comprenant un ensemble de tapis en caoutchouc, déposés à intervalles réguliers, au champ. L'engrais est ensuite épandu, et l'agriculteur photographie, au moyen de son téléphone intelligent (en anglais « smartphone »), chacun des tapis et des granulés d'engrais qui le recouvrent. Une telle solution est notamment décrite dans le brevet européen EP 3 275 302.

Une application embarquée compare le volume d'engrais recueilli sur chaque tapis avec un volume de référence visé pour ces paramètres d'épandage. Si le résultat d'épandage n'est pas optimal, l'application propose des corrections correspondantes pour le réglage de l'épandeur d'engrais concerné. Ainsi, par comparaison de la distribution réelle sur tapis de différents engrais et de paramètres théoriques de réglage de l'épandeur, il est possible de déterminer des corrections, ou des valeurs consignes d'épandage, pour une base de données d'engrais.

Si ces solutions sont intéressantes et permettent d'améliorer la précision de réglage des épandeurs centrifuges, elles ont cependant pour inconvénient de ne pas prendre en compte l'hygrométrie et la variabilité des produits à épandre. De plus, si elles donnent des résultats performants pour les engrais référencés dans les bases de données propriétaires, elles pourraient être améliorées pour les produits non référencés, qui sont caractérisés de manière approximative, notamment en termes d'aspect et de granulométrie.

Pour résoudre ces inconvénients, la société Amazone^{®} propose, dans le brevet européen EP 3 087 817, une méthode pour vérifier l'aptitude d'un engrais à être épandu : un produit à épandre est pris en photo sur un support de prise de vue, et un algorithme de traitement d'images compare la photo à une base de données de produits. Lorsque le produit référencé le plus proche du produit photographié est identifié, ses propriétés d'épandabilité sont choisies pour définir le réglage optimum de l'épandeur centrifuge.

Si cette solution augmente la fiabilité de la comparaison du produit à épandre à une base de données de produits connus, il n'en demeure pas moins qu'elle n'offre qu'une solution approchante, pour les produits non référencés, et qu'elle n'offre donc des résultats satisfaisants que si l'un au moins des produits de la base de données présente des caractéristiques suffisamment semblables à celle du produit à épandre.

En outre, cette solution, si intéressante qu'elle soit sur le plan théorique, peut s'avérer difficile à mettre en œuvre, en pratique, par l'agriculteur au champ.

On connaît encore du document US 4 975 863 un système d'examen de particules, par exemple des grains de riz, pour vérifier leur état, par analyse d'images. Le système présenté dans ce document est une solution destinée à être utilisée en laboratoire. Il est encombrant et lourd à transporter, du fait de l'utilisation préférentielle d'une pompe de mise sous vide pour maintenir les graines à analyser dans leurs emplacements. Il nécessite par ailleurs de disposer d'une ou plusieurs sources de lumière externes au dispositif pour s'adapter aux conditions d'illumination de la scène, et n'est donc pas autonome en énergie.

On connaît également du document US 2005/074146 un système d'analyse optique de grains ou de graines, qui est notamment adapté pour l'analyse colorimétrique de grains de maïs, afin d'en caractériser certaines de leurs propriétés. A nouveau, un tel système est conçu pour être utilisé en laboratoire ; il n'est pas portatif et ne peut être utilisé sur le terrain par l'agriculteur. Il n'est pas autonome en énergie, et nécessite une alimentation électrique lourde et encombrante pour alimenter les sources de lumière et l'équipement de prise de vue. En outre, dans le mode de réalisation proposant un compartiment étanche en lumière, pour s'adapter à toutes les conditions d'éclairage de la scène, les particules à analyser sont versées en vrac sur un support, qui est introduit dans le compartiment par une porte latérale de ce dernier : ce système ne propose donc pas une solution pour ancrer et distancier les particules à analyser qui soit adaptée à des situations de terrain, dans lesquelles le dispositif ne peut pas toujours être disposé dans un plan horizontal.

Aucun de ces deux systèmes n'est en outre adapté pour fonctionner avec un équipement de prise de vue portatif, tel qu'un smartphone.

On connaît enfin, dans un domaine éloigné de celui de l'analyse de particules pour l'agriculture, un équipement d'examen d'un objet, par analyse d'image, décrit dans le document US 2013/215282. Ce document est assez éloigné de la problématique de la présente demande de brevet, et ne propose donc pas de conditions de portabilité et d'adaptabilité à une utilisation au champ. Un tel équipement d'examen n'est notamment pas autonome en énergie. Il n'est pas non plus adapté à l'analyse de particules directement au champ, qui doivent être correctement distanciées les unes des autres pour une analyse d'image performante, ce que ne propose pas ce document. Un tel équipement n'est pas portatif et n'est pas utilisable sur le terrain dans des conditions d'inclinaison.

Il existe donc un besoin d'une technique de détermination de caractéristiques de particules à épandre ou semer qui ne présente pas ces différents inconvénients de l'art antérieur. Notamment, il existe un besoin d'une technique d'aide à l'acquisition d'images d'un échantillon de particules à épandre ou semer, permettant, par analyse des images acquises, une telle détermination des caractéristiques des particules de l'échantillon que l'agriculteur s'apprête à épandre ou à semer. Il existe encore un besoin d'une telle technique qui soit ergonomique, légère et portative pour l'agriculteur, et facilement utilisable en extérieur, par exemple directement au champ. Il existe notamment un besoin d'un dispositif qui soit portatif, léger, autonome en énergie, peu coûteux et facilement transportable pour être utilisable directement à proximité de la zone d'épandage ou de semis des particules. Notamment, il existe un besoin d'un tel dispositif qui fonctionne correctement, au champ, même dans des conditions de mauvaise horizontalité ou de faible stabilité. Il existe enfin un besoin d'une telle technique qui permette de réaliser des prises de vue d'un échantillon de particules, de manière précise et répétable, quelles que soient les conditions environnementales (vent, vibration, poussières, pluie, brouillard...) sur la zone d'épandage ou de semis.

### Exposé de l'invention

L'invention répond à ce besoin en proposant un dispositif selon la revendication 1.

Ainsi, l'invention repose sur une approche tout à fait nouvelle et inventive de la mise en place des particules en vue de l'acquisition d'images d'un échantillon de particules à semer ou épandre, conçue pour permettre des prises de vue de qualité du produit à épandre, même lorsque l'agriculteur est en extérieur, par exemple au champ. Un tel dispositif est portable, donc léger, et autonome en énergie.

La plaque de dépose des particules est équipée d'une pluralité d'emplacements, par exemple sous la forme d'alvéoles, idéalement destinées à recevoir chacune une particule de l'échantillon.

Les particules sont ainsi distanciées les unes des autres, ce qui facilite la détermination ultérieure de leurs caractéristiques individuelles, par analyse d'image. En effet, elles peuvent ainsi être aisément isolées dans l'image, ce qui permet un calcul facilité de leur circularité, de leur angularité, et de caractéristiques telles que le diamètre de Féret minimal, le diamètre de Féret maximal, ou encore le diamètre du cercle équivalent.

En outre, les particules sont ainsi ancrées sur la plaque de dépose dans les emplacements prévus à cet effet, et peu susceptibles de glisser à la surface de la plaque, ce qui permet d'éviter à l'opérateur d'avoir à placer le dispositif d'aplomb lors des prises de vue réalisées sur le terrain. Le dispositif est ainsi ergonomique, pratique et facile d'utilisation, y compris en extérieur, par exemple au champ.

Le dispositif de l'invention peut, selon les modes de réalisation, être utilisé avec :
- Un compartiment dont les parois sont opaques, et qui se présente dans un mode de réalisation sous forme d'un cône tronqué de forme pyramidale.
   Ce compartiment permet d'empêcher la lumière extérieure d'impacter la prise de vue : en effet, sa base est directement couplée à la plaque de dépose, qu'elle recouvre. Dans un mode de réalisation, la plaque de dépose constitue même la base du compartiment, dont elle fait partie intégrante. La section supérieure du compartiment, parallèle à la base, est obturée par un plateau de support portant l'équipement de prise de vue, ou même par l'équipement de prise de vue lui-même. Ainsi, ce compartiment devient obscur lorsqu'on place l'équipement de prise de vue sur le plateau de support : la lumière extérieure ne peut pénétrer dans le dispositif, et l'échantillon n'est illuminé, lors de la prise de vue, que par un éclairage artificiel intégré au dispositif, ou fourni par l'équipement de prise de vue (par exemple le flash d'un smartphone). On garantit ainsi des conditions d'éclairage optimales, répétables et contrôlées, et donc une excellente répétabilité des prises de vue, et ce, quelles que soient les conditions climatiques ou d'ensoleillement sur la zone d'épandage ou de semis des particules. En outre, dans le cas où l'échantillon est éclairé par le flash de l'équipement de prise de vue, et qu'on ne prévoit pas d'éclairage artificiel intégré au dispositif, ce dernier est autonome en énergie : il n'est pas nécessaire de prévoir de batteries d'alimentation électrique, et le dispositif est donc léger, peu encombrant, et peu coûteux. Sur le plan industriel, le dispositif peut ainsi être fabriqué facilement, en ayant recours par exemple aux techniques de la plasturgie, en un nombre de pièces très réduit.
   En outre, grâce à ce compartiment qui s'interface entre l'équipement de prise de vue et la plaque de dépose, on garantit, pour toutes les prises de vue successives, une distance constante, et connue, entre l'échantillon de particules et le capteur d'image de l'équipement de prise de vue. On peut ainsi estimer la taille des particules de l'échantillon, par connaissance des propriétés du capteur d'image consultables par le processeur de traitement de l'image dans les paramètres de l'équipement de prise de vue. Notamment, pour une qualité d'image optimale, les dimensions de ce compartiment sont choisies de façon que la hauteur entre l'objectif de l'équipement de prise de vue et la plaque de dépose de l'échantillon permette une résolution d'image d'au moins 34 pixels/mm, même pour les équipements de prise de vue les moins performants du marché à ce jour.
- Un plateau de support, qui est porté ou formé par la section supérieure du compartiment obscur, qu'il vient obturer. Ce plateau de support reçoit l'équipement de prise de vue, par exemple le smartphone de l'agriculteur, ou une tablette, ou encore un appareil photo numérique ou une webcam. Il est de préférence dimensionné pour pouvoir porter tous types de smartphones du marché à ce jour. Il présente en outre une ouverture (par exemple une découpe rectangulaire ou carrée du plateau de support), face à laquelle l'agriculteur place le ou les objectif(s) de son équipement de prise de vue, et éventuellement le flash qui y est intégré. Les dimensions de cette ouverture sont choisies pour couvrir de préférence la surface du capteur d'images et du flash des équipements de prise de vue (notamment des smartphones) existant sur le marché. Lorsque l'agriculteur positionne son smartphone sur le plateau de support, l'ouverture ménagée dans ce dernier est totalement obturée, et la lumière extérieure ne peut donc pas entrer dans le compartiment obscur, ni venir perturber les conditions d'illumination de l'échantillon de particules. Pour faciliter le positionnement du smartphone sur le plateau de support, il est prévu dans un mode de réalisation d'imprimer sur ce dernier différents gabarits correspondant aux smartphones les plus courants du marché.

Le dispositif selon l'invention permet donc l'acquisition précise et répétable d'images d'un échantillon de particules. En outre, il est ergonomique, portatif et peut-être aisément utilisé sur le terrain par l'agriculteur, par exemple en combinaison avec le smartphone de ce dernier. Dans ce cas, il est avantageux d'utiliser le flash du smartphone pour éclairer l'échantillon de particules lors de la prise de vue, de façon que le dispositif soit totalement autonome en énergie, mais également léger (il n'a pas besoin d'intégrer de batteries d'alimentation électrique d'un éclairage artificiel) et de réalisation peu coûteuse (il peut s'agir d'un objet simple réalisé de manière industrielle en plasturgie).

Selon une caractéristique particulière, la plaque de dépose comprend une pluralité d'alvéoles formant chacune un emplacement pour recevoir une des particules, et les alvéoles appartiennent au groupe comprenant :
- des cavités hémisphériques ;
- des alvéoles hexagonales ;
- des alvéoles de section parallélépipédique dans le plan de ladite plaque de dépose.

Par exemple, des alvéoles présentant une forme de symétrie simple de type losange peuvent permettre de loger des semences, comme des graines de blé. Plus généralement, la forme et les dimensions des alvéoles peuvent être adaptées au type de particules à épandre. De même, elles peuvent être agencées de différentes manières à la surface de la plaque de dépose.

Ainsi, les alvéoles hexagonales sont agencées selon un motif en nid d'abeille, afin de réduire autant que faire se peut la superficie des surfaces planes entre les alvéoles adjacentes. En variante, quelle que soit leur forme ou leur dimension, les alvéoles peuvent aussi être agencées selon un motif de type « boîte à œufs » par exemple.

Selon un mode de réalisation, lorsque la plaque est configurée pour l'acquisition d'images d'un échantillon de particules de diamètre moyen T, les alvéoles présentent un diamètre D sensiblement compris entre 3*T/2 et 11*T/6. Par exemple, dans le cas d'alvéoles hémisphériques, ou sensiblement hémisphériques, D désigne le diamètre de la sphère correspondante ou d'une sphère approchante. Dans le cas d'alvéoles hexagonales, il s'agit du diamètre du cercle dans lequel s'inscrit l'hexagone. Dans le cas d'alvéoles de section parallélépipédique, ce diamètre peut correspondre à la diagonale du parallélépipède. Le diamètre moyen T des particules correspond par exemple au diamètre D50 des particules : on rappelle que le diamètre moyen, dit D50, résulte d'une mesure granulométrique par tamisage successif, et correspond au diamètre pour lequel 50% des particules sont plus grosses (et donc restent dans le tamis) et 50% des particules sont plus petites (et donc traversent le tamis). Le diamètre D50 peut également être calculé à partir de la valeur médiane du diamètre de Féret minimal.

On s'assure ainsi que chaque alvéole puisse contenir une particule, et que les particules présentes dans des alvéoles adjacentes soient suffisamment distanciées les unes des autres pour un traitement d'image efficace et fiable.

Selon un aspect avantageux, lorsque la plaque est configurée pour l'acquisition d'images d'un échantillon de particules de diamètre moyen T, une zone frontière entre deux alvéoles adjacentes s'inscrit dans un cylindre dont un axe principal est situé dans le plan de la surface de la plaque de dépose et traverse le centre des deux alvéoles adjacentes, et dont un diamètre D_{c} est sensiblement compris entre 0,6 _{*} T et 1,1 _{*} T.

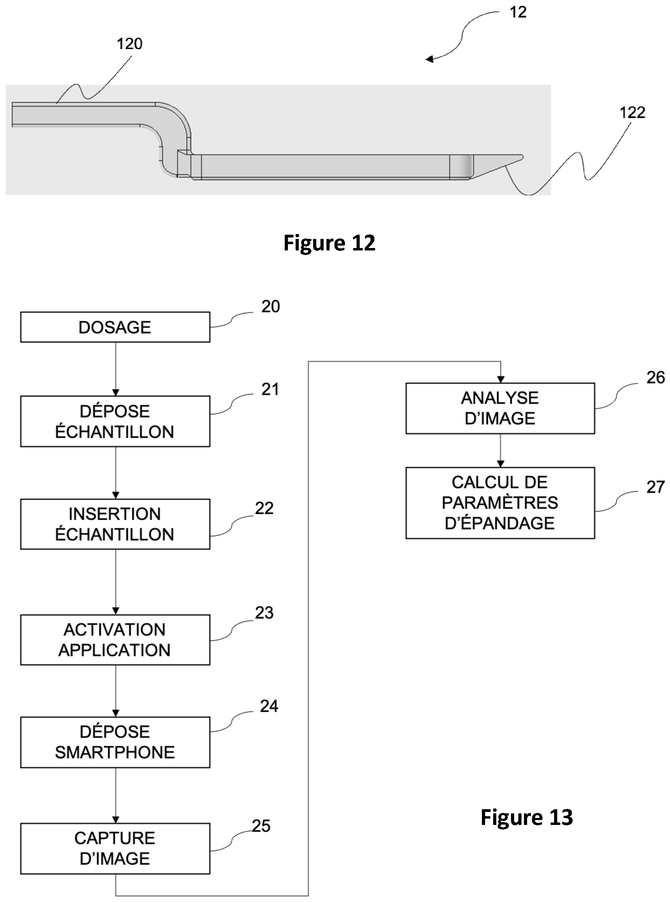

A nouveau, on entend par exemple par diamètre moyen le diamètre D50 de l'échantillon de particules, qui peut être obtenu par mesure granulométrique par tamisages successifs, ou à partir d'un système d'imagerie. Les zones frontières entre alvéoles adjacentes sont ainsi évidées, et épousent la forme de cylindres, comme illustré par les figures 12D à 12F discutées ci-après. De tels cylindres peuvent être des cylindres circulaires, dont la base est un cercle de diamètre D_{c} ; ils peuvent aussi prendre la forme de cylindres à base elliptique, hexagonale, octogonale, etc. Le diamètre D_{c} s'interprète alors comme l'une des dimensions de la forme de la base, par exemple, dans un mode de réalisation, le rayon du cercle circonscrit à la base hexagonale ou octogonale, ou le grand axe de la base elliptique.

Cette forme particulière des zones frontières entre alvéoles présente le double avantage de permettre un meilleur étalement des particules à la surface de la plaque de dépose, et de supprimer des surfaces planes à la surface de la plaque, de sorte à limiter les reflets dus au flash lors de l'acquisition d'images.

Selon un autre aspect, lorsque la plaque est configurée pour l'acquisition d'images d'un échantillon de particules de diamètre moyen T, les alvéoles présentent un perçage traversant une épaisseur de la plaque de dépose, un tel perçage étant d'un diamètre d sensiblement compris entre 0,4*T et 0,7*T.

Un tel perçage traversant peut présenter une forme cylindrique. Il permet notamment l'évacuation des poussières, qui s'écoulent par gravité des alvéoles vers le fond de la plaque de dépose, au travers de ces trous traversants.

Selon une autre caractéristique de l'invention, la plaque de dépose présente au moins deux marqueurs d'étalonnage des images, présentant des caractéristiques différentes.

L'analyse ultérieure des images acquises par le smartphone ou l'équipement de prise de vue est ainsi facilitée par la présence, sur la plaque de dépose, de plusieurs marqueurs d'étalonnage. En effet, ces marqueurs, qui présentent de préférence des caractéristiques différentes, permettent de réaliser une calibration des images, ce qui permet d'accroître la précision et la fiabilité de la détermination des caractéristiques des particules de l'échantillon.

Selon une caractéristique de l'invention, lesdits au moins deux marqueurs d'étalonnage comprennent au moins un marqueur d'étalonnage colorimétrique, disposé dans une zone centrale de la plaque de dépose, et au moins un marqueur d'étalonnage géométrique, disposé dans une zone périphérique de la plaque de dépose.

Le marqueur d'étalonnage colorimétrique se présente par exemple sous la forme d'une mire, disposée sensiblement au centre de la plaque de dépose. Elle permet de réaliser un étalonnage colorimétrique de l'image, par comparaison de la couleur de la surface de la plaque et de la couleur de ce marqueur d'étalonnage, ce qui permet de compenser l'effet du flash ou de l'éclairage intégré. On peut alors définir les plages RVB (ou en anglais RGB pour « Red Green Blue ») de l'image.

Le ou les marqueur(s) géométrique(s) sont quant à eux disposés de préférence en périphérie de la plaque de dépose : par exemple, quatre marqueurs d'étalonnage géométrique sont disposés dans chacun des coins de la plaque de dépose. Dans un mode de réalisation, ces marqueurs présentent plusieurs formes géométriques différentes, par exemple un cercle, un hexagone, un octogone et un carré. La reconnaissance de ces formes dans l'image permet de calibrer la circularité et l'angularité de ces formes géométriques connues, et ainsi prendre en compte une éventuelle déformation de l'image par le capteur du smartphone. On peut ainsi en déduire d'éventuels facteurs de correction à appliquer à l'image pour une détermination aussi précise que possible des caractéristiques des particules de l'échantillon.

Selon un mode de réalisation de l'invention, la plaque de dépose et le marqueur d'étalonnage colorimétrique présentent une couleur ayant une valeur de teinte située entre 270° et 290° dans un système TSL (pour « Teinte Saturation Luminosité ») et les marqueurs d'étalonnage géométrique présentent au moins en partie une couleur ayant une valeur de teinte située entre 90° et 130° dans un système TSL.

Ainsi, le fond du tiroir et la mire centrale sont de préférence de couleur violette, qui correspond à la couleur la plus différente de celle des principaux produits fertilisants du marché, et offrant donc le meilleur contraste pour une analyse d'image précise. Le fond du tiroir est de préférence de couleur mate (de préférence, la plaque de dépose présente un indice de réflectance inférieur ou égal à environ 1,4), et, dans un mode de réalisation, sa couleur a une valeur de saturation supérieure à 90%.

Les marqueurs géométriques ont au moins en partie la couleur ayant la teinte opposée à la couleur de la plaque de dépose, c'est-à-dire la couleur verte pour un fond de tiroir violet. Dans un mode de réalisation, tout le contour de la plaque de dépose, sur lequel sont disposés les marqueurs géométriques, est de couleur verte.

Selon un aspect de l'invention, la plaque de dépose comprend une pluralité d'alvéoles formant chacune un emplacement pour recevoir une des particules, et les marqueurs de référence sont disposés à une hauteur H par rapport à une surface de la plaque de dépose, la hauteur H étant sensiblement égale à la moitié de la profondeur des alvéoles.

Ainsi, les marqueurs d'étalonnage sont décalés en hauteur par rapport au fond du tiroir, par exemple de 2mm, ou plus généralement d'une hauteur correspondant à la moitié de la hauteur moyenne des particules, de sorte que les marqueurs d'étalonnage soient placés dans le même plan horizontal que le centre de gravité moyen des particules. La hauteur de ces marqueurs peut donc varier en fonction de la famille de particules pour laquelle la plaque de dépose est conçue. Selon un aspect de l'invention, un tel dispositif comprend un support de réception d'un élément doseur de l'échantillon.

Un tel élément doseur peut se présenter sous la forme d'un verre doseur ou d'une cuillère doseuse, qui est de préférence intégré au dispositif. De cette façon, on impose à l'utilisateur le volume d'échantillon à prélever, pour s'assurer qu'une quantité correcte de particules soit déversée sur la plaque de dépose, qui permette de recouvrir intégralement le fond du tiroir ou la plaque de dépose d'une couche de particules disjointes. Le support de l'élément doseur étant intégré au dispositif, on s'assure que l'utilisateur l'ait toujours sous la main, ce qui est pratique et ergonomique.

Selon encore un aspect de l'invention, un tel dispositif comprend une pluralité de plaques de dépose interchangeables, présentant chacune des emplacements de dimensions différentes. Ainsi, il est possible d'adapter le dispositif selon un mode de réalisation de l'invention aux différents types de produits à épandre, en prévoyant des dimensions d'emplacements, par exemple d'alvéoles (notamment diamètre et profondeur), adaptées aux dimensions des particules de produit.

### Présentation des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
- la **figure 1** propose une représentation géométrique d'une nappe d'épandage, telle qu'observable à l'arrière d'un épandeur centrifuge ;
- la **figure 2** illustre une vue en perspective d'un dispositif d'aide à acquisition d'image d'un échantillon de particules selon un mode de réalisation de l'invention ;
- la **figure 3** présente une vue en perspective du tiroir de dépose de l'échantillon de particules, extrait du dispositif de la figure 2 ;
- la **figure 4** présente une vue de dessus de la plaque de dépose de l'échantillon de particules selon un mode de réalisation de l'invention ;
- la **figure 5** présente une vue en coupe de la plaque de dépose selon un mode de réalisation de l'invention ;
- la **figure 6** présente une vue en perspective d'un exemple de forme d'alvéole ;
- la **figure 7** présente une vue en perspective de la plaque de dépose, dans un mode de réalisation où les alvéoles prennent la forme présentée en **figure 6****,** et sont agencées selon un motif régulier de type « boîte à œufs » ;
- les **figures 8A à 8H** illustrent plus en détail un exemple de procédé de réalisation du motif d'alvéoles de la **figure** 7 ;
- la **figure** 9 illustre un exemple de réalisation d'un élément doseur utilisé pour prélever un échantillon de particules ;
- la **figure 10** présente une vue en perspective du tiroir, dans un mode de réalisation particulier dans lequel le tiroir prend la forme d'une pelle de prélèvement de l'échantillon ;
- la **figure 11** présente une vue de dessus du tiroir de la figure 10 ;
- la **figure 12** présente une vue de côté du tiroir de la figure 10 ;
- la **figure** 13 présente sous forme d'organigramme les étapes principales mises en œuvre lors de l'utilisation du dispositif d'aide à acquisition d'images décrit en relation avec les figures précédentes.

### Description détaillée de modes de réalisation de l'invention

Le principe général de l'invention repose sur la conception d'un dispositif portatif ergonomique, léger et peu coûteux, qui soit facilement utilisable en extérieur, directement au champ, et qui permette à un agriculteur de faire l'acquisition, avec son smartphone par exemple, d'une ou plusieurs images d'un échantillon de particules à épandre. Ces images peuvent ensuite être analysées, par un processeur présent dans le smartphone ou dans un serveur distant, pour déterminer certaines caractéristiques morphologiques des particules et, en fonction de celles-ci, calculer les paramètres de réglage d'épandage optimaux de l'épandeur centrifuge.

Un dispositif de distanciation des particules et d'aide à l'acquisition d'images selon l'invention comprend une plaque de dépose, apte à recevoir des particules et permettant de réaliser des prises de vue d'un échantillon de particules (engrais ou semences) de manière précise et répétable, quelles que soient les conditions environnementales à proximité de la zone d'épandage ou de semis des particules. Cette plaque de dépose peut être logée dans un réceptacle, ou tiroir, qui peut être muni d'une poignée et/ou d'un bord adapté pour former une pelle.

On présente désormais, en relation avec la **figure** 2, un exemple de réalisation d'un tel dispositif d'aide à l'acquisition d'images d'un échantillon de particules à épandre, référencé 1, mettant en œuvre une plaque de dépose coopérant avec un plateau de support et un compartiment opaque. Dans cet exemple de réalisation, le dispositif 1 comprend un plateau de support 10, sur lequel l'utilisateur peut poser un équipement de prise de vue, par exemple un téléphone intelligent (en anglais, « smartphone »), une tablette, une webcam ou un appareil photo. On décrit dans la suite un exemple préférentiel dans lequel l'équipement de prise de vue est le smartphone de l'agriculteur.

Le plateau de support 10 présente une ouverture 101, en regard de laquelle l'utilisateur place l'objectif de son smartphone 11, et éventuellement le flash intégré à ce dernier. En variante, le dispositif 1 est équipé d'un éclairage artificiel intégré, qui peut être utilisé en lieu et place du flash. Cet éclairage artificiel intégré est par exemple placé dans le compartiment référencé 13, qui est disposé sous le plateau de support 10, et dont les parois sont opaques. Dans ce cas, il est alors nécessaire de prévoir également des batteries d'alimentation de cet éclairage artificiel intégré. Ces batteries sont inutiles quand on utilise le flash du smartphone 11, de sorte que le dispositif 1 est plus léger, moins coûteux, et autonome en énergie.

Dans l'exemple de réalisation de la **figure** 2, le compartiment 13 est de forme tronconique. Il peut être placé sur un support optionnel, par exemple quatre pieds. Dans l'exemple de la **figure** 2, la base du compartiment 13 est plane et constitue la surface d'appui du dispositif 1, sans qu'il soit nécessaire de prévoir un support ou des pieds.

En outre, un tiroir 12 coulisse à la base du compartiment 13. Ce tiroir 12 est de préférence équipé d'une poignée 120 pour une manipulation plus aisée. Le fond du tiroir 12 reçoit une plaque de dépose des particules de l'échantillon à photographier.

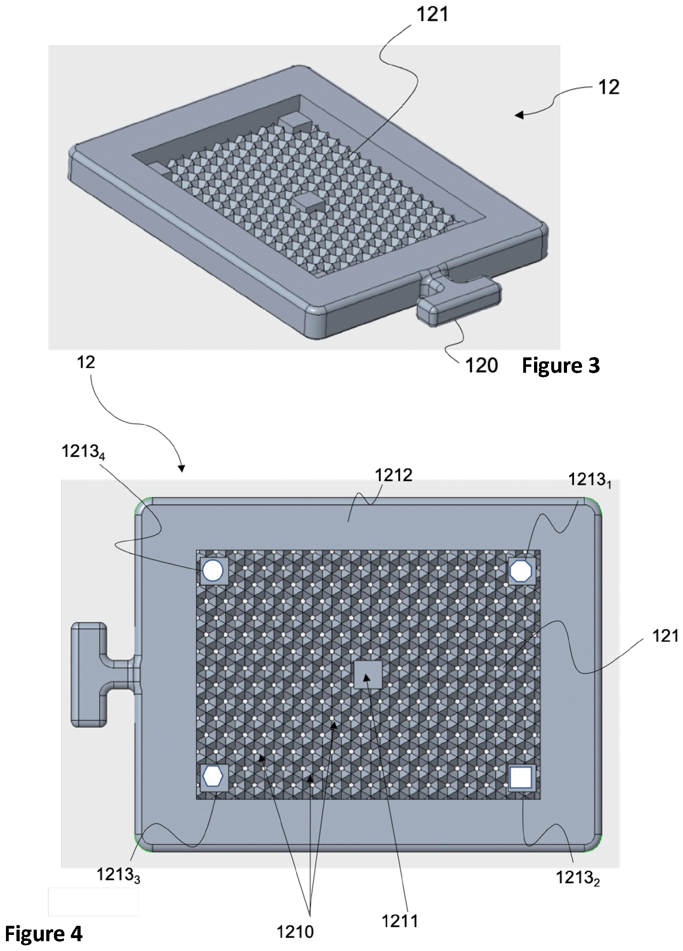

On présente, en relation avec les **figures** 3 **à 5**, un exemple de réalisation de la plaque de dépose de l'échantillon de particules, dans une variante particulière dans laquelle elle est disposée sur le fond d'un tiroir 12.

Comme illustré en **figure** 3, cet élément se présente sous la forme d'un tiroir, équipé d'une poignée de préhension 120, afin d'offrir à l'utilisateur une ergonomie satisfaisante pour facilement remplir ou vider ce tiroir d'un échantillon de particules à épandre. Dans un mode de réalisation préférentiel, ce tiroir 12 s'encastre à la base du compartiment obscur 13, par exemple au niveau de sa base parallélépipédique 131. Il présente donc des dimensions correspondantes à celles du compartiment 13, par exemple 120 mm x 120 mm x 20 mm.

Le fond du tiroir 12 est recouvert d'une plaque 121 dont la surface est couverte d'un motif régulier d'emplacements, par exemple des alvéoles ou de petites cavités hémisphériques. En variante, la plaque 121 est recouverte d'un motif régulier de picots, délimitant les emplacements destinés aux particules. Dans un mode de réalisation, la plaque 121 est équipée de 225 alvéoles de 3 mm de diamètre par exemple, formant un motif en nid d'abeille. Ces alvéoles sont destinées à recevoir chacune une particule de l'échantillon, de façon que celles-ci soient distanciées les unes des autres dans l'image qui va être capturée. Ainsi, lorsque l'utilisateur verse l'échantillon dans le tiroir, les particules vont naturellement rouler, se répandre sur la plaque, et se loger chacune dans l'une des alvéoles.

En outre, la profondeur des alvéoles est choisie de façon que les particules restent ancrées sur la plaque de dépose 121, même dans le cas où le dispositif 1 n'est pas placé dans un plan horizontal.

On évite ainsi à l'opérateur d'avoir à placer le dispositif 1 d'aplomb, lors des prises de vues réalisées sur le terrain. Cette faible sensibilité à l'aplomb rend le dispositif pratique et ergonomique pour une manipulation sur le terrain. En effet, l'utilisateur peut notamment déplacer le dispositif, sans que les particules ne bougent sur la plaque de dépose. Ceci contribue à son caractère portatif et adapté à une utilisation au champ.

Cette double fonction de séparation et de maintien des particules, remplie par la plaque de dépose 121, facilite l'étape de segmentation, lors du traitement ultérieur de l'image.

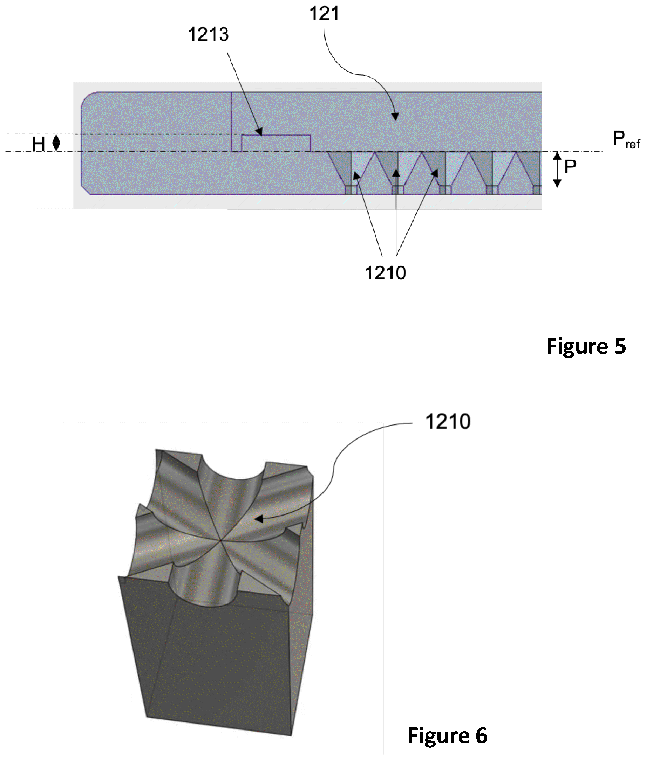

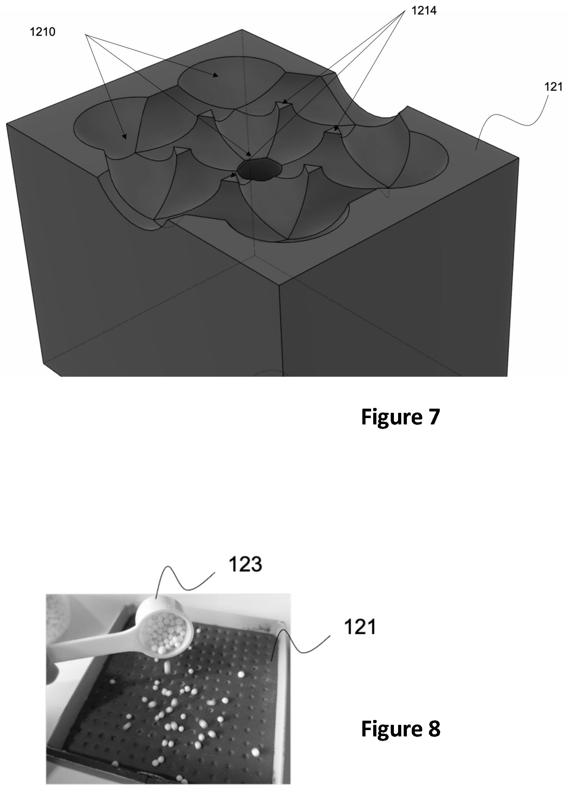

On privilégie de préférence un motif d'emplacements qui permet de minimiser la superficie des surfaces planes entre les emplacements : en effet, ces surfaces planes génèrent des phénomènes de reflets du flash ou de l'éclairage artificiel, qu'il est souhaitable de réduire autant que faire se peut. Une structure d'alvéoles hexagonales en nid d'abeille, ou une structure alvéolaire de type « boîte à œufs » (voir **figures 6** **et** 7), offrent de ce point de vue des solutions intéressantes.

On peut prévoir plusieurs plaques de dépose 121 interchangeables pour couvrir le fond du tiroir 12, ou plusieurs tiroirs 12 équipés chacun de plaques de dépose 121 différentes, notamment en termes de nombre, de motif et de dimensions des emplacements, par exemple des alvéoles. On peut ainsi prévoir plusieurs plaques de dépose 121, adaptées chacune à un type de particules à épandre, avec des diamètres et des profondeurs d'alvéoles variant par exemple de 1 à 6 mm pour les particules d'engrais. Pour d'autres types de particules, par exemple des graines, d'autres gammes de diamètres et de profondeurs peuvent être envisagées, par exemple de l'ordre du centimètre. On peut en outre prévoir des formes d'alvéoles différentes (hémisphériques, hexagonales, en losange...), selon le type de particules (engrais ou semences par exemple).

En outre, dans un mode de réalisation, la plaque de dépose 121 est de couleur mate, avec un indice de réflectance inférieur à 1,4, une valeur de saturation supérieure à 90% et une valeur de teinte située entre 270° et 290° dans un système TSL (pour « Teinte Saturation Luminosité »). En effet, des résultats d'étude menées notamment par la société Amazone^{®} dans le cadre du développement de leur système EasyCheck^{®} ont permis d'identifier cette teinte violette comme étant la teinte la plus opposée à celle de la plupart des particules d'engrais du marché, ce qui facilite donc la séparation de l'image des particules de celle du fond du tiroir lors du traitement de la prise de vue. Ce résultat fait notamment l'objet du document de brevet EP 3 275 302 B1. La couleur mate, associée à un faible indice de réflectance, permet quant à elle de réduire les phénomènes de reflet de la lumière du flash ou de l'éclairage artificiel, qui sont susceptibles de nuire à la qualité du traitement d'image.

Pour faciliter l'analyse de l'image, et notamment déterminer des modèles de correction colorimétrique et géométrique à appliquer à l'image pour compenser d'éventuelles déformations induites par le capteur du smartphone 11, on équipe par ailleurs la plaque de dépose 121 d'une pluralité de marqueurs d'étalonnage, ou mires.

En variante, ces marqueurs d'étalonnage sont mobiles, par exemple sous la forme de billes ou de solides de formes géométriques et de couleurs prédéfinies (par exemple, une bille violette et un cube vert), et sont placés sur la plaque de dépose à des fins de calibration. Ces marqueurs d'étalonnage peuvent aussi être disposés sur les parois du compartiment 13.

On peut aussi, dans un autre mode de réalisation, prévoir un tiroir dédié à l'étalonnage, dont le fond est équipé d'une plaque sur laquelle sont imprimés ces marqueurs d'étalonnage : dans un premier temps, on insère donc le tiroir d'étalonnage, pour réaliser une calibration initiale, avant de remplacer ce tiroir d'étalonnage par le tiroir contenant la plaque de dépose 121 recouverte de l'échantillon de particules, pour l'acquisition d'image.

Dans un mode de réalisation illustré en **figure 4****,** la plaque de dépose 121 présente une surface violette matte ponctuée d'un motif régulier d'alvéoles hexagonales 1210 en nid d'abeille : en son centre, un marqueur d'étalonnage colorimétrique 1211 se présente sous la forme d'un motif carré, en légère surélévation, et de même couleur violette que le fond de la plaque 121. Dans un autre mode de réalisation, le marqueur d'étalonnage colorimétrique 1211 est de forme circulaire. La zone périphérique de la plaque est équipée d'une mire de calibration 1212 de couleur verte, i.e. de la couleur présentant la teinte la plus opposée à celle du fond violet. Dans chacun de ses quatre coins, la plaque 121 porte également des marqueurs d'étalonnage géométriques 1213₁ à 1213₄. Ces marqueurs 1213₁ à 1213₄ présentent des formes géométriques différentes : par exemple, le marqueur 1231₁ est octogonal, le marqueur 1213₂ est carré, le marqueur 1213₃ est hexagonal et le marqueur 1213₄ est circulaire. Ces formes géométriques, préalablement enregistrées dans une mémoire du dispositif d'analyse d'images de l'échantillon (e.g. le smartphone 11 lui-même, ou un serveur distant avec lequel il communique), peuvent être comparées à leur représentation dans l'image acquise, pour prendre en compte la déformation éventuelle de l'image par le capteur du smartphone 11. Sur cette base, il est possible de déterminer des facteurs de correction géométriques de l'image, pour une calibration des paramètres de circularité et d'angularité.

Les marqueurs 1213₁ à 1213₄ sont des formes géométriques de couleur violette, comme le fond de la plaque 121, dessinés sur un plot carré 1213 de couleur verte, comme la mire de calibration 1212, pour être aisément identifiés et localisés au sein de l'image. Un tel plot carré 1213 est par exemple de dimensions 8 mm x 8 mm.

Ces quatre plots carrés 1213, formant support des marqueurs 1213₁ à 1213₄, jouent également un rôle important dans la calibration géométrique de l'image : l'étalonnage géométrique peut en effet être effectué à partir des quatre côtés de chacun des quatre plots carrés, soit seize côtés.

Le marqueur d'étalonnage colorimétrique 1211 peut être facilement localisé au centre de l'image, par triangulation à partir des positions des quatre marqueurs d'étalonnage géométriques 1213₁ à 1213₄. Ce marqueur d'étalonnage colorimétrique 1211, dont la teinte a été préalablement mémorisée dans une mémoire du dispositif d'analyse d'images de l'échantillon (e.g. le smartphone 11 lui-même, ou un serveur distant avec lequel il communique), permet de déterminer des facteurs de correction de l'image visant à compenser l'effet du flash ou de l'éclairage artificiel intégré. En effet, compte tenu de sa position centrale sur la plaque 121, c'est au niveau de ce marqueur 1211 que la lumière du flash sera la plus concentrée, et que le violet de l'image sera le plus saturé.

En outre, on choisit de préférence la matière de la plaque 121 pour éviter les phénomènes de réflexion de l'éclairage artificiel, et éviter ainsi le bruitage de l'image, du fait des reflets du flash. Par exemple, la plaque 121 est conçue en PMMA (Poly Méthacrylate de Méthyle Acrylique, ou plexiglass), en PE (Poly Éthylène) ou en PTFE (Poly Tétra Fluoro Éthylène, ou Teflon^{®}).

Comme illustré sur la **figure 5****,** qui présente une vue en coupe du tiroir 12, les différents marqueurs d'étalonnage 1211 et 1213₁ à 1213₄ sont de préférence légèrement surélevés par rapport à la surface de la plaque 121, d'une hauteur H telle que H=P/2 environ, où P est la profondeur des alvéoles 1210. Plus généralement, on a de préférence H ≤ *P* ≤ *2H.* On s'assure ainsi d'une correction optimale des paramètres colorimétriques et géométriques affectant les particules dans l'image analysée : en effet, les plots 1213 qui portent les différents marqueurs d'étalonnage sont placés, par rapport au plan de référence P_{ref} correspondant à la surface de la plaque de dépose 121, à une hauteur H correspondant au centre de gravité moyen des particules de l'échantillon.

Les **figures 6** **et** **7** présentent une autre forme intéressante des alvéoles, et de leur motif régulier sur la plaque 121.

La **figure 6** présente une vue en perspective d'une alvéole 1210 : comme on peut l'observer, on obtient une telle forme d'alvéole 1210, à la surface de la plaque de dépose 121, en creusant tout d'abord une cavité hémisphérique à la surface de la plaque. La surface de la plaque entourant cette cavité hémisphérique est ensuite creusée au moyen d'un demi-cylindre, dont l'axe principal est situé dans le plan de la surface de la plaque de dépose, et que l'on positionne successivement en trois positions angulairement espacées de 120°, obtenues par rotation du demi-cylindre, dans le plan de la surface de la plaque de dépose, autour du centre de la cavité hémisphérique précédemment formée.

Ainsi, qu'illustré en **figure 7****,** cette forme d'alvéole 1210 peut avantageusement être agencée à la surface de la plaque 121 selon un motif régulier de type « boîte à œufs ». En partant d'un pavage hémisphérique à la surface de la plaque de dépose, et en creusant les alvéoles hémisphériques comme décrit ci-avant en relation avec la **figure 6****,** on obtient un motif régulier d'alvéoles 1210 qui minimise la superficie des surfaces planes 1214 entre alvéoles 1210 adjacentes. On réduit ainsi les phénomènes parasites de reflet du flash sur la surface de la plaque de dépose 121, qui sont susceptibles de nuire à la qualité de la prise de vue, et donc à la détermination des caractéristiques morphologiques des particules.

Les **figures 8A à 8H** illustrent plus en détail un exemple de procédé de réalisation du motif d'alvéoles de la **figure 7****.**

La plaque de dépose alvéolée est formée à partir d'une plaque rectangulaire d'épaisseur E, illustrée en **figure 8A**. Pour un échantillon de particules de taille moyenne T, on choisit une plaque d'épaisseur E>T.

On définit, à la surface de cette plaque, un motif en pavage triangulaire, comme illustré en **figure 8B**. Ce pavage triangulaire dessine à la surface de la plaque de dépose un motif de triangles équilatéraux de côté C, sensiblement compris entre 4*T/3 et 6*T/3. Dans un mode de réalisation préférentiel, C=5*T/3.

On forme ensuite dans la plaque de dépose un ensemble de creux sphériques : on évide la plaque de dépose en retirant la matière comprise dans une sphère de diamètre D, dont le centre est placé à la surface de la plaque de dépose, sur un sommet commun à six triangles équilatéraux adjacents du pavage, comme illustré en **figure 8C.** Le diamètre D des sphères est sensiblement compris entre 3*T/2 et 11*T/6. Dans un mode de réalisation préférentiel, D=5*T/3.

On forme ainsi à la surface de la plaque de dépose un motif régulier de cavités hémisphériques adjacentes, de diamètre D, destinée à recevoir chacune une particule à analyser.

Selon un premier perfectionnement, illustré par les **figures 8D à 8F,** on évide encore la plaque de dépose en s'appuyant sur les lignes créées par le pavage, et en créant des cylindres ayant pour axe les lignes du pavage de la **figure 8B.** Chacun de ces cylindres vient enlever de la matière sur la plaque. Le diamètre du cylindre D_{c} est défini par rapport à la taille des particules selon la formule suivante : 0,6 _{*} T≤ D_{c}≤ 1,1 _{*} T. Dans un mode de réalisation préférentiel, D_{c}=T.On abaisse ainsi la hauteur des parois séparant les alvéoles adjacentes, de façon à permettre un meilleur étalement des particules à la surface de la plaque de dépose. En outre, ce perfectionnement permet d'éviter les surfaces planes sur la plaque de dépose, et ainsi limiter les reflets du flash ou de l'éclairage artificiel.

Selon un deuxième perfectionnement optionnel, illustré en **figure 8G,** on prévoit également, dans chaque alvéole, un trou traversant permettant l'évacuation des poussières susceptibles de dégrader la qualité et la résolution des images. Un tel trou traversant peut prendre la forme d'un cylindre de révolution, de base circulaire. L'axe de révolution d'un tel cylindre passe par le centre des sphères de formation des alvéoles hémisphériques, i.e. par le point de pavage de la **figure 8B,** et est perpendiculaire à la base de la plaque de la **figure 8A,** donc vertical. Le diamètre d de ce cylindre est choisi en fonction de la taille moyenne des particules à analyser, et est sensiblement compris entre 0,4*T et 0,7*T. Dans un mode de réalisation préférentiel, d=T/2.

La **figure 8H** illustre la forme finale d'une plaque de dépose alvéolée réalisée selon le procédé décrit ci-dessus en relation avec les **figures 8A à 8G.**

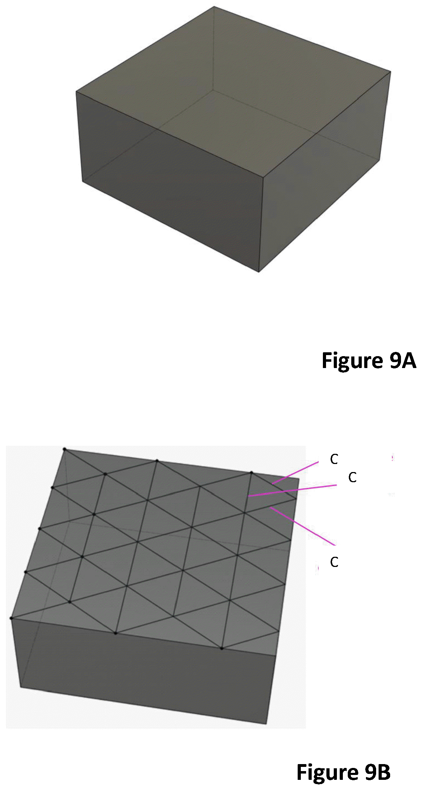

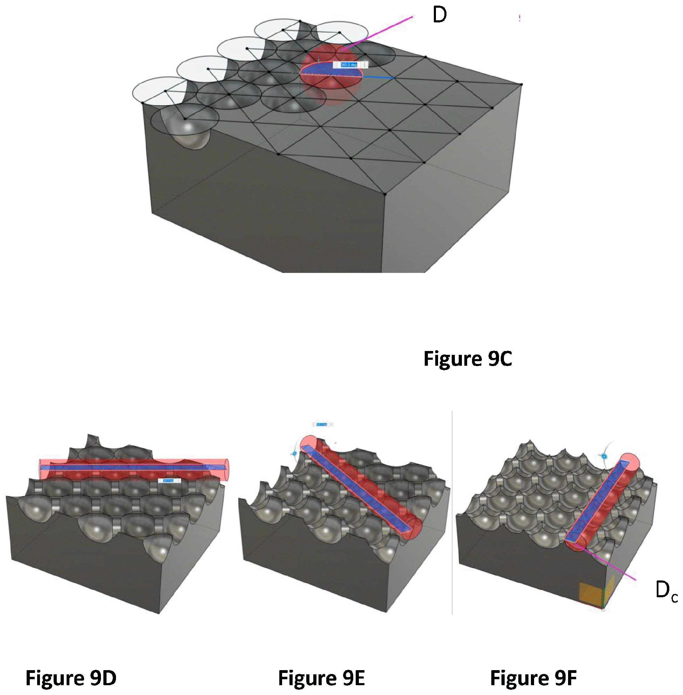

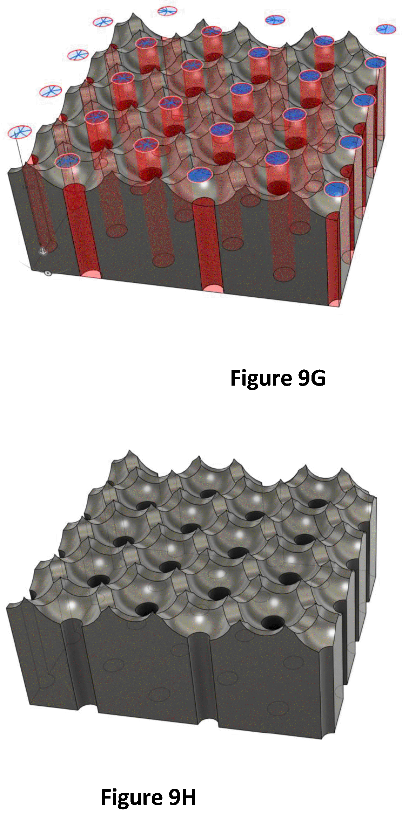

Pour une prise de vue optimale de l'échantillon de particules à épandre, il est souhaitable de recouvrir intégralement la plaque de dépose 121 d'une couche de particules disjointes. Pour ce faire, le dispositif selon un mode de réalisation de l'invention intègre un élément doseur 123 (par exemple un verre doseur ou une cuillère de dosage), permettant d'imposer à l'utilisateur le volume de particules à prélever et à répandre sur la plaque de dépose 121 avant l'acquisition d'image. Ceci est illustré par la **figure 9****.** Le dispositif peut intégrer un support de réception de l'élément doseur 123, non représenté sur la **figure 9** **:** par exemple, la cuillère de dosage se clipse sur une paroi du compartiment 13.

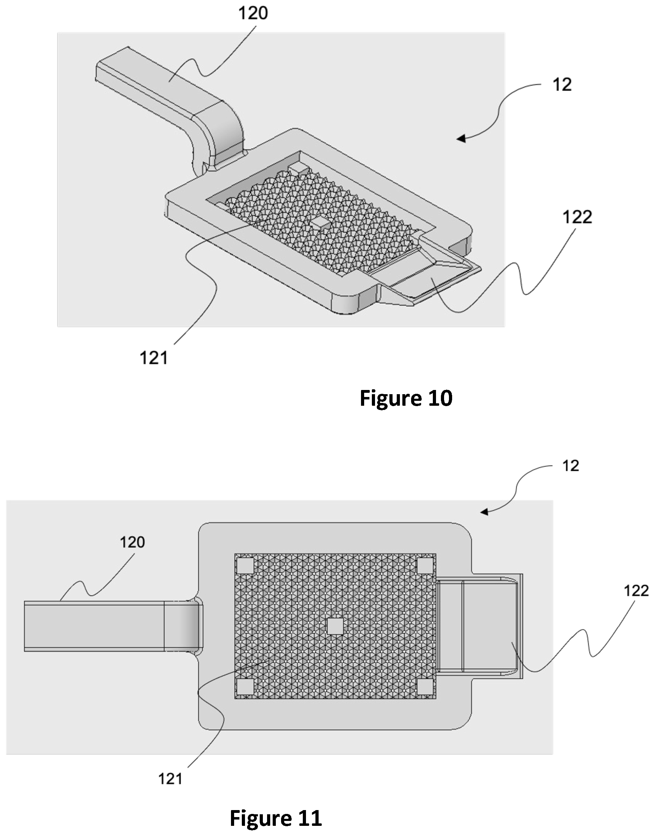

Dans un mode de réalisation, illustré par les **figures 10 à 12****,** le tiroir 12 et la plaque de dépose 121 prennent la forme d'une pelle de prélèvement, de sorte que le tiroir 12 constitue lui-même l'élément doseur 123. Pour ce faire, comme illustré par la **figure 10****,** la poignée de préhension 120 est adaptée pour prendre la forme d'un manche, pour permettre un maniement plus aisé du tiroir lors du prélèvement de l'échantillon, et le bord du tiroir opposé à la poignée de préhension 120 est abaissé, ou prend la forme d'un plan incliné 122, sur tout ou partie de sa largeur. Les **figures 11** **et** **12** offrent respectivement des vues de dessus et de côté d'un tel tiroir, présenté en perspective sur la **figure 10****.**

On peut prévoir que le manche 120 soit articulé, pour pouvoir être replié le long du dispositif d'aide à acquisition d'image (par exemple le long du compartiment 13, ou sous ce dernier), en dehors des phases de manipulation du tiroir 12 par l'utilisateur. On obtient ainsi un dispositif plus compact. A l'inverse, le manche 120 peut former une poignée de préhension du dispositif, quand le tiroir 12 est encastré dans le compartiment 13, pour faciliter son transport et son déplacement par l'utilisateur.

On présente désormais, en relation avec l'organigramme de la **figure 13****,** les principales étapes mises en œuvre lors de l'utilisation du dispositif d'aide à acquisition d'images décrit ci-avant.

Au cours d'une étape référencée 20, l'utilisateur prélève un échantillon de particules de volume déterminé, au moyen de l'élément doseur 123 intégré au dispositif selon un mode de réalisation de l'invention. Dans un mode de réalisation, le dispositif est monté sur le côté de la trémie de l'épandeur centrifuge, et l'élément doseur 123 permet de prélever directement des particules dans le réservoir de la trémie.

Au cours d'une étape référencée 21, l'utilisateur dépose l'échantillon de particules ainsi prélevé sur la plaque de dépose 121 disposée au fond du tiroir 12, de façon à la recouvrir intégralement d'une couche de particules distanciées les unes des autres, grâce au motif d'alvéoles qui la recouvrent.

Dans un autre mode de réalisation, le tiroir 12 forme une pelle de prélèvement de l'échantillon de particules, et remplit donc la fonction de l'élément doseur : dans ce cas, les étapes 20 et 21 sont donc confondues.

L'utilisateur couple ensuite (étape 22) cette plaque de dépose, alimentée en particules, avec le dispositif d'aide à acquisition d'images, par exemple par insertion du tiroir 12 à la base du compartiment tronconique 13.

Lors d'une étape référencée 23, il active alors, sur son smartphone 11, une application dédiée à la détermination des paramètres de réglage de largeur de son épandeur centrifuge, par analyse d'images d'un échantillon de particules à épandre. Cette application logicielle est notamment configurée pour commander le flash et l'appareil photo du smartphone 11, et peut guider l'utilisateur dans le positionnement du smartphone 11 sur le plateau de support 10.

Ainsi, lorsque l'utilisateur dépose (étape 24) son smartphone 11 sur le plateau de support 10, l'application activée lors de l'étape 23 peut piloter la restitution à l'utilisateur d'un message l'invitant à déplacer son smartphone pour que l'objectif soit bien positionné au-dessus de l'ouverture 101, pour que l'image soit bien centrée, et pour que l'ouverture 101 soit intégralement obturée par le smartphone. Ce message peut être un message visuel affiché sur l'écran du smartphone (par exemple, un ensemble de flèches indiquant le sens de déplacement recommandé du smartphone), ou un message audio diffusé par le haut-parleur du smartphone. L'application peut commander la restitution d'un signal de confirmation de bon positionnement (par exemple, affichage d'un coche vert sur l'écran du smartphone lorsque celui-ci est placé de manière optimale sur le plateau de support).

L'application logicielle commande alors l'activation du capteur d'image, et éventuellement du flash, pour que le smartphone réalise une capture d'une ou plusieurs image(s) de l'échantillon, lors d'une étape référencée 25.

La ou les images de l'échantillon font l'objet d'une analyse lors de l'étape référencée 26, qui peut être effectuée par un processeur du smartphone 11, s'il dispose de la capacité de traitement nécessaire.

Le traitement des étapes 26 et 27 par le smartphone 11 lui-même est avantageux en ce qu'il permet à l'utilisateur d'obtenir un résultat direct, même en dehors de couverture réseau, ce qui s'avère parfois utile sur le terrain, au champ. Le dispositif est alors tout à fait autonome et utilisable à proximité de la zone d'épandage ou de semis.

En variante, les images capturées peuvent être exportées par le smartphone 11 vers un serveur de traitement distant, par exemple par radiocommunication de type 4G ou 5G. Dans ce cas, les étapes référencées 26 et 27 sont effectuées par ce serveur distant, qui envoie au smartphone 11 les résultats de ses calculs.

Dans le cas où l'équipement de prise de vue est une webcam ou un appareil photo numérique, il peut être relié, par câble ou liaison sans fil de type Bluetooth^{®} par exemple, à un ordinateur de type PC, de préférence un ordinateur portable, qui réalise le traitement de l'image (étapes 26 et 27). En variante, un tel équipement de prise de vue peut être directement relié, avec ou sans fil, à l'ordinateur de bord de la machine d'épandage, dont la fonction est de piloter l'épandeur, et dont les processeurs peuvent être utilisés pour réaliser le traitement et l'analyse des images capturées, calculer à partir de celles-ci les caractéristiques morphologiques des particules, ainsi que les paramètres d'épandage appropriés qui en résultent
En effet, l'analyse de l'image effectuée lors de l'étape 26 permet de calculer différentes caractéristiques morphologiques pour une particule à épandre identifiée sur l'image.

Bien que cela ne soit pas illustré sur la **figure** 13, on peut également prévoir que d'autres informations soient saisies, en complément de la capture d'images, par l'utilisateur, pour affiner l'étape 27 de calcul des paramètres d'épandage.

Ainsi, l'utilisateur peut saisir dans l'application le résultat d'une mesure de densité des particules, effectuée avec un densimètre. Il peut également renseigner dans l'application le type d'épandeur centrifuge qu'il utilise (choix du modèle), ainsi que le jeu de pales qui l'équipe.

En retour, l'application lui fournit par exemple une liste de largeurs de travail possible, en fonction de ces différents paramètres. L'utilisateur choisit, au sein de cette liste, la largeur de travail qu'il vise. A l'issue de l'étape référencée 27, l'application fournit à l'utilisateur les paramètres de réglage de l'épandeur nécessaires pour la largeur de travail choisie.

## Revendications

1. Dispositif de distanciation de particules et d'aide à l'acquisition d'images d'un échantillon de particules à épandre ou semer, susceptibles d'être utilisées pour déterminer des caractéristiques morphologiques desdites particules, pour prédire des paramètres appropriés d'épandage ou de semis, **caractérisé en ce qu'**il est portatif, **et en ce qu'**il comprend une plaque (121) de dépose dudit échantillon de particules, ladite plaque de dépose comprenant une pluralité d'alvéoles définissant un motif régulier d'emplacements (1210) et formant chacune un emplacement pour recevoir une desdites particules, lesdites particules pouvant rouler, se répandre sur la plaque, et se loger chacune dans l'une des alvéoles, la profondeur desdites alvéoles étant choisie de façon que les particules restent ancrées sur la plaque de dépose, même dans le cas où le dispositif n'est pas placé dans un plan horizontal, par exemple à proximité d'une zone d'épandage ou de semis desdites particules.

2. Dispositif selon la revendication 1, **caractérisé en ce que** ladite plaque est logée dans une pelle de prélèvement des particules, équipée d'une poignée de préhension (120).

3. Dispositif selon la revendication 2, **caractérisé en ce que** le bord de la pelle de prélèvement des particules opposée à la poignée de préhension (120) est abaissé ou prend la forme d'un plan incliné (122), sur tout ou partie de sa largeur.

4. Dispositif selon la revendication 1, **caractérisé en ce que** ladite plaque de dépose présente au moins deux marqueurs d'étalonnage (1211, 1212, 1213₁-1213₄) desdites images, présentant des caractéristiques différentes.

5. Dispositif selon la revendication 4, **caractérisé en ce que** lesdits au moins deux marqueurs d'étalonnage comprennent au moins un marqueur d'étalonnage colorimétrique (1211), disposé dans une zone centrale de ladite plaque de dépose, et au moins un marqueur d'étalonnage géométrique (1213₁-1213₄), disposé dans une zone périphérique de ladite plaque de dépose.

6. Dispositif selon la revendication 5, **caractérisé en ce qu'**il comprend quatre marqueurs d'étalonnage géométrique, disposés dans chacun des coins de ladite plaque de dépose, et présentant au moins deux formes géométriques différentes.

7. Dispositif selon la revendication 5, **caractérisé en ce que** ladite plaque de dépose et ledit marqueur d'étalonnage colorimétrique (1211) se présente sous la forme d'un motif, en légère surélévation, et de même couleur que le fond de la plaque (121).

8. Dispositif selon la revendication 5, **caractérisé en ce que** ladite plaque de dépose et ledit marqueur d'étalonnage colorimétrique (1211) présentent une couleur ayant une valeur de teinte située entre 270° et 290° dans un système TSL (pour « Teinte Saturation Luminosité ») **et en ce que** lesdits marqueurs d'étalonnage géométrique présentent au moins en partie une couleur ayant une valeur de teinte située entre 90° et 130° dans un système TSL.

9. Dispositif selon la revendication 1, **caractérisé en ce que** lesdites alvéoles appartiennent au groupe comprenant :
- des cavités hémisphériques ;
- des alvéoles hexagonales ;
- des alvéoles de section parallélépipédique dans le plan de ladite plaque de dépose.

10. Dispositif selon la revendication 9, **caractérisé en ce que** lesdites alvéoles sont agencées selon un motif en nid d'abeille.

11. Dispositif selon la revendication 9, **caractérisé en ce que,** lorsque ledit dispositif est configuré pour l'acquisition d'images d'un échantillon de particules de diamètre moyen T, lesdites alvéoles présentent un diamètre D sensiblement compris entre 3*T/2 et 11*T/6.

12. Dispositif selon la revendication 9, **caractérisé en ce que,** lorsque ledit dispositif est configuré pour l'acquisition d'images d'un échantillon de particules de diamètre moyen T, une zone frontière entre deux alvéoles adjacentes s'inscrit dans un cylindre dont un axe principal est situé dans le plan de la surface de ladite plaque de dépose et traverse le centre desdites deux alvéoles adjacentes, et dont un diamètre Dc est sensiblement compris entre 0,6 _{*} T et 1,1 _{*} T.

13. Dispositif selon les revendications 4 et 9, **caractérisé en ce que** lesdits marqueurs de référence sont disposés à une hauteur H par rapport à une surface (Pref) de ladite plaque de dépose, ladite hauteur H étant sensiblement égale à la moitié de la profondeur P desdites alvéoles.

14. Dispositif selon la revendication 1, **caractérisé en ce que** lesdites alvéoles présentent un perçage traversant ladite plaque.

15. Dispositif selon la revendication 1, **caractérisé en ce que** ladite plaque de dépose présente un indice de réflectance inférieur ou égal à environ 1,4.
